# EUROPEAN PATENT APPLICATION

(11) **EP 4 120 179 A1**
(43) Date of publication of application: **18.01.2023**
(21) Application number: 20923725.4
(22) Date of filing: 12.03.2020
(51) Int. Cl.: G06Q 50/30

(54) **INFORMATION PROCESSING APPARATUS, INFORMATION PROCESSING METHOD, AND COMPUTER-READABLE RECORDING MEDIUM**

(71) Applicant: NEC Corporation, 108-8001 Tokyo (JP)
(72) Inventor: KOBAYASHI, Masanori, Tokyo 108-8001 (JP); ICHIKAWA, Akihiko, Tokyo 108-8001 (JP)
(74) Representative: Betten & Resch
(86) International application number: PCT/JP2020/010951
(87) International publication number: WO 2021/181636

(57) **Abstract**

The information processing apparatus 10 acquires biological information of a passenger 55 who has disembarked from an aircraft. The information processing apparatus 10 acquires flight information corresponding to the acquired biological information from a storage device 52 in which the biological information of the passenger 55 and the flight information of the passenger 55 are stored in association with each other. Then, the information processing apparatus 10 determines, based on the acquired flight information, whether the passenger 55 is a passenger who is to re-board an aircraft after disembarking from the aircraft. The information processing apparatus 10 displays information according to the determination result on display devices 53 and 54.

## Description

### TECHNICAL FIELD

The present invention relates to an information processing apparatus, an information processing method, and a computer readable recording medium.

### BACKGROUND ART

Many display devices that display various types of information are installed in an airport facility. These display devices display aircraft flight information, information about the airport facility, and the like. For example, Patent Document 1 discloses an invention that displays information required by a customer in an airport terminal so that the customer can easily see it. In Patent Document 1, guidance is performed by displaying the direction of a boarding gate based on the current position of the user and information regarding the aircraft that the user is to board, and facilities such as shops are displayed upon determining whether or not there is time until the departure time.

### LIST OF RELATED ART DOCUMENTS

### PATENT DOCUMENT

Patent Document 1: Japanese Unexamined Patent Publication No. 2004-110377

### SUMMARY OF INVENTION

### PROBLEMS TO BE SOLVED BY THE INVENTION

Incidentally, in the case of an airport, and in particular, a hub airport, a passenger stays at the airport for a long time due to an aircraft transfer or the like in some cases. In this case, some passengers participate in a tour at the airport where they disembarked for a transfer, or rest at a hotel. For this reason, it is desirable to display information and suggest an optimum service to a passenger who has time to spare. With Patent Document 1, it is not possible to suggest sufficient services to such a passenger.

In view of this, one example of an object of the present invention is to provide an information processing apparatus, an information processing method, and a computer readable recording medium that display information to a passenger who has disembarked from an aircraft.

### MEANS FOR SOLVING THE PROBLEMS

In order to achieve the above-described object, an information processing apparatus according to one aspect of the present invention includes:
a biological information acquisition unit configured to acquire biological information of a passenger who has disembarked from an aircraft;
a flight information acquisition unit configured to acquire flight information corresponding to the acquired biological information from a storage device in which the biological information of the passenger and the flight information of the passenger are stored in association with each other;
a passenger determination unit configured to determine, based on the acquired flight information, whether the passenger is a passenger who is to re-board an aircraft after disembarking from the aircraft; and
a display control unit configured to display a result corresponding to a determination result on a display device.

In order to achieve the above-described object, an information processing method according to one aspect of the present invention includes:
a step of acquiring biological information of a passenger who has disembarked from an aircraft;
a step of acquiring flight information corresponding to the acquired biological information from a storage device in which the biological information of the passenger and the flight information of the passenger are stored in association with each other;
a step of determining, based on the acquired flight information, whether the passenger is a passenger who is to re-board an aircraft after disembarking from the aircraft; and
a step of displaying information corresponding to a determination result on a display device.

Also, in order to achieve the above-described object, a computer readable recording medium according to one aspect of the present invention includes a program recorded thereon, the program including instructions that cause a computer to carry out:
a step of acquiring biological information of a passenger who has disembarked from an aircraft;
a step of acquiring flight information corresponding to the acquired biological information from a storage device in which the biological information of the passenger and the flight information of the passenger are stored in association with each other; and
a step of determining, based on the acquired flight information, whether the passenger is a passenger who is to re-board an aircraft after disembarking from the aircraft.

### ADVANTAGEOUS EFFECTS OF THE INVENTION

According to the present invention, information can be displayed to a passenger who has disembarked from an aircraft.

### BRIEF DESCRIPTION OF THE DRAWINGS

FIG. 1 is a block diagram showing a configuration of an information processing apparatus.
FIG. 2 is a block diagram showing a specific configuration of the information processing apparatus.
FIG. 3 is a diagram for illustrating information display performed by the information processing apparatus.
FIG. 4 is a diagram showing an example of a display screen displayed on a display device installed at an airport.
FIG. 5 is a diagram showing an example of a display screen displayed on a display device owned by a passenger.
FIG. 6 is a diagram showing an example of a display screen displayed on the display device owned by the passenger.
FIG. 7 is a flowchart showing the operation of the information processing apparatus.
FIG. 8 is a block diagram showing an example of a computer that realizes an information processing apparatus.

### EXAMPLE EMBODIMENTS

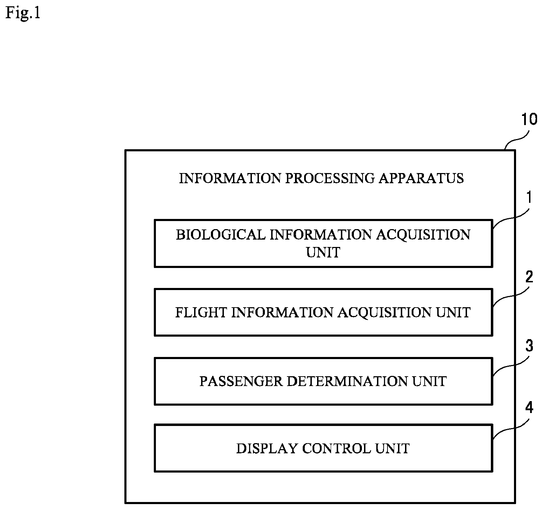

Hereinafter, an information processing apparatus, an information processing method, and a program according to an example embodiment of the present invention will be described with reference to FIGS. 1 to 8.

### [Apparatus configuration]

First, a configuration of the information processing apparatus according to the present example embodiment will be described with reference to FIG. 1. FIG. 1 is a block diagram showing a configuration of an information processing apparatus 10.

The information processing apparatus 10 is an apparatus that displays information to a passenger who is to stay at the airport for a long time for transit or transfer. The information processing apparatus 10 includes a biological information acquisition unit 1, a flight information acquisition unit 2, a passenger determination unit 3, and a display control unit 4.

The biological information acquisition unit 1 acquires biological information of a passenger who has disembarked from an aircraft. The biological information includes face image data, fingerprint data, vocal cord data, iris data, and the like.

The flight information acquisition unit 2 acquires flight information corresponding to the acquired biological information from a storage device in which the biological information of the passenger and the flight information of the passenger are stored in association with each other in advance.

The passenger determination unit 3 determines, based on the acquired flight information, whether the passenger is a passenger who is to re-board an aircraft after disembarking from an aircraft (hereinafter referred to as a transit passenger).

The display control unit 4 displays information according to the determination result on the display device.

The information processing apparatus 10 having this configuration can display information to a passenger who has disembarked from an aircraft. For example, when a passenger who has disembarked from an aircraft is to stay at the airport in order to re-board an aircraft, the passenger staying at the airport can effectively spend his or her layover at the airport due to the information processing apparatus 10 displaying information suitable for the stay.

Next, the configuration of the information processing apparatus 10 in the present example embodiment will be described more specifically.

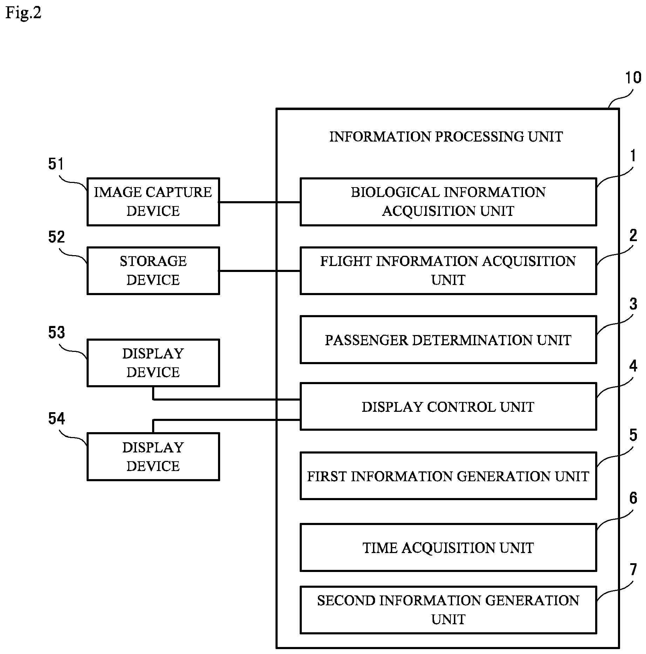

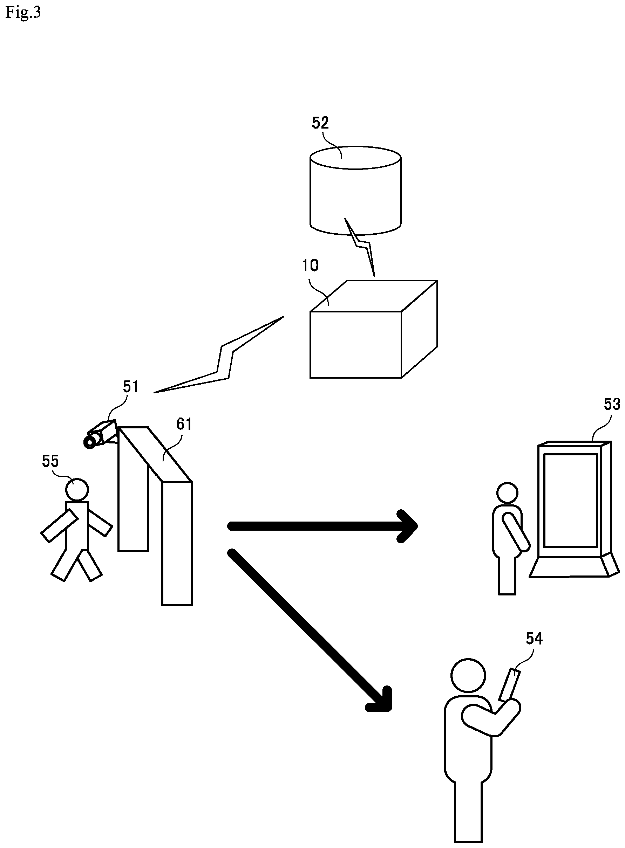

FIG. 2 is a block diagram showing a specific configuration of the information processing apparatus 10. FIG. 3 is a diagram for illustrating information display performed by the information processing apparatus 10. Hereinafter, the biological information will be described as face image data.

The information processing apparatus 10 is connected to an image capture device 51, a storage device 52, and a display device 53 so as to be capable of data communication therewith.

The image capture device 51 is installed in the airport facility and captures an image of the face of the passenger 55. The image capture device 51 is installed at a location where an image of the face of the passenger 55 who has disembarked from an aircraft can be captured, such as an arrival gate at an airport or a baggage claim area. FIG. 3 shows a state in which the image capture device 51 is provided at the arrival gate 61 and captures an image of the face of the passenger 55 passing through the arrival gate 61. Note that the image capture device is installed not only at the arrival gate 61 but also at each touch point such as check-in, baggage deposit, identity verification before security inspection, and departure inspection at the departure airport, and immigration inspection, customs procedures, and the arrival gate at the arrival airport. Then, an image of the face of the passenger 55 is captured at each touch point.

The storage device 52 stores the face image data of the passenger 55 and the identification information of the passenger 55 in association with each other. The identification information includes unique information and flight information. The unique information includes the name, nationality, passport number, e-mail address, and the like of the passenger 55. The flight information includes the destination, transit point, departure and arrival times of the aircraft, and the like of the passenger 55.

For example, during check-in at the departure airport, identity confirmation is performed by matching the passport of passenger 55 and the face image data, and then the face image data, flight information, and unique information are associated with each other and registered in the storage device 52. The passenger 55 is registered, for example, using a dedicated terminal installed at the airport. This makes it possible to confirm the identity by capturing an image of the face of the passenger 55 at each touch point after check-in. At each touch point, when an image of the face is captured, the face image data of the passenger 55 is selected from the storage device 52 through one-to-N matching using the captured face image data. By acquiring the unique information and flight information corresponding to the selected face image data, identity confirmation is performed at each touch point. Note that it is possible to manage the procedure status of passenger 55 due to being able to confirm the identity through face recognition at each touch point.

The information processing apparatus 10 or another apparatus may perform various procedures through facial recognition and processing for performing storage in the storage device. Also, in the above description, the face image data, the unique information, and the flight information are registered in the storage device 52 at the time of check-in, but the timing of registration in the storage device 52 is not limited to this. The passenger 55 may register the face image data, the unique information, and the flight information in advance using a dedicated application of a mobile terminal such as a smartphone, a dedicated website, or the like.

The display device 53 is installed in an airport, for example, near the arrival gate 61. The display device 53 is, for example, a liquid crystal display device, and displays various types of information. Note that an image capture device may be provided in one piece with the display device 53, or be provided separately from the display device 53 in cooperation with the display device 53, and may capture an image of the face of the passenger 55 looking at the display device 53.

The information processing apparatus 10 and the storage device 52 are connected to a network, and the installation location may be in the airport or in a facility other than the airport.

Also, the information processing device 10 can transmit data to the display device 54. The display device 54 is, for example, a smartphone, a tablet terminal, a PC (personal computer), or the like owned by the passenger 55. The information processing apparatus 10 can transmit an e-mail to the display device 54 based on the e-mail address included in the unique information obtained by capturing an image of the face of the passenger 55.

The information processing apparatus 10 includes a first information generation unit 5, a time acquisition unit 6, and a second information generation unit 7, in addition to the biological information acquisition unit 1, the flight information acquisition unit 2, the passenger determination unit 3, and the display control unit 4, as described above.

The biological information acquisition unit 1 acquires face image data of the passenger 55 from the image capture device 51. For example, as shown in FIG. 3, when the passenger 55 passes through the arrival gate 61, the image capture device 51 captures an image of the face of the passenger 55. The biological information acquisition unit 1 acquires face image data of the passenger 55 passing through the arrival gate 61. Note that if the display device 53 is provided with an image capture device, the biological information acquisition unit 1 may acquire face image data of the passenger 55 captured when the passenger 55 looks at the display device 53.

The flight information acquisition unit 2 acquires the flight information included in the identification information by acquiring the identification information corresponding to the face image data acquired by the biological information acquisition unit 1 from the storage device 52. When the biological information acquisition unit 1 acquires the face image data, the flight information acquisition unit 2 selects the face image data from the storage device 52 through one-to-N matching using the face image data. The flight information acquisition unit 2 acquires the flight information corresponding to the selected face image data.

The passenger determination unit 3 determines, based on the flight information, whether the passenger 55 whose image was captured by the biological information acquisition unit 1 is a transit passenger. For example, if the flight information includes a transit point for the passenger 55 and the airport where the image capture device 51 is installed is the transit point, the passenger determination unit 3 determines that the passenger 55 who has disembarked from the aircraft is a transit passenger. If the flight information does not include the transit point for the passenger 55, or if the flight information includes the destination for the passenger 55 and the airport is the destination, the passenger determination unit 3 determines that the passenger 55 who has disembarked from the aircraft is not a transit passenger.

Note that transit passengers include passengers who are to re-board an aircraft different from the one they disembarked from, and passengers who are to re-board the same aircraft as the one they disembarked from.

If the passenger 55 is a transit passenger, the time acquisition unit 6 acquires the re-boarding time from disembarkation to re-boarding based on the flight information acquired by the flight information acquisition unit 2. The re-boarding time is the time from the current time to the time when the flight to be re-boarded starts boarding.

If the passenger 55 is a re-boarding passenger, the first information generation unit 5 determines an activity to perform before re-boarding, which is to be suggested to the passenger 55, and generates information about the activity. Activities to perform before re-boarding, which are to be suggested to the passenger 55, include participation in a tour that passenger 55 can participate in before re-boarding, resting at a hotel, and having a meal at a restaurant. The information on the activity includes tour information, hotel information, restaurant information, and the like. The first information generation unit 5 may determine an activity that can be performed within the re-boarding time, such as participation in a tour that ends within the re-boarding time, based on the re-boarding time acquired by the time acquisition unit 6. Alternatively, the first information generation unit 5 may determine actions such as participation in a tour being held on the current day, and having a meal at a restaurant open on the current day, regardless of the re-boarding time.

If the passenger 55 is a re-boarding passenger, the second information generation unit 7 generates information regarding re-boarding based on the flight information acquired by the flight information acquisition unit 2. The information regarding re-boarding is, for example, information such as the departure time of the aircraft to be re-boarded or the gate at the time of re-boarding.

If the passenger 55 is a transit passenger, the display control unit 4 displays the information determined by the first information generation unit 5 or the second information generation unit 7 on the display device 53, or transmits the information to the display device 54 owned by the passenger 55 by e-mail.

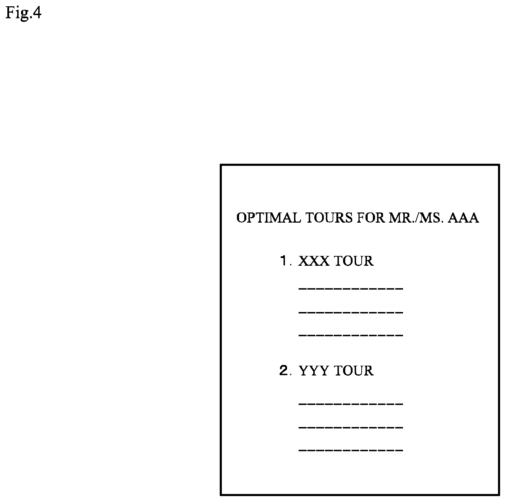

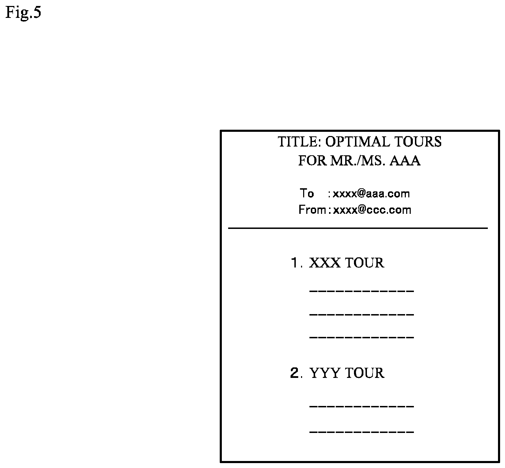

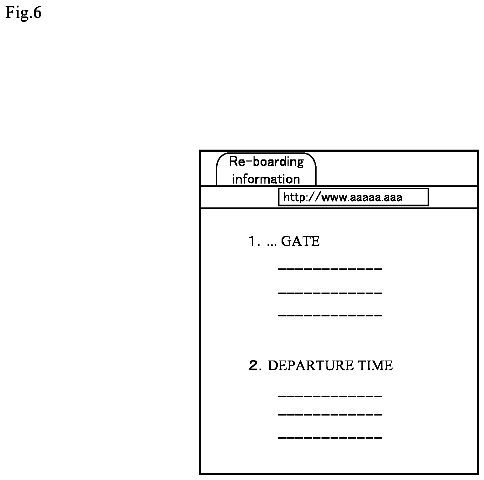

FIG. 4 is a diagram showing an example of a display screen displayed on the display device 53 installed at the airport. FIGS. 5 and 6 are diagrams showing an example of a display screen displayed on the display device 54 owned by the passenger 55. FIGS. 4 and 5 show an example of a display screen in which the activity information generated by the first information generation unit 5 is used as tour information. FIG. 6 shows an example of a display screen for information regarding re-boarding generated by the second information generation unit 7.

Since the transit passenger is to stay at the airport for a long time, the display control unit 4 displays tour information on the display device 53 as shown in FIG. 4. Note that if the display device 53 is, for example, a touch panel type, more detailed information may be displayed when the displayed tour information is selected.

Also, the display control unit 4 transmits an e-mail including information regarding re-boarding to the display device 54. As a result, a mail screen as shown in FIG. 5 is displayed on the display device 54. Alternatively, the display control unit 4 transmits the address of the website displaying the tour information to the display device 54 by e-mail. The owner (passenger 55) of the display device 54 taps (clicks on) the address included in the e-mail to display the website screen as shown in FIG. 6. By displaying the information on the display device 54 owned by the passenger 55, it is possible to prevent personal information such as the name of the passenger 55 from being known by a third party. Note that when the tour information displayed on the display device 54 or the information regarding re-boarding is selected, more detailed information may be displayed.

The passenger 55, who is a transit passenger, can acquire information on an effective way to spend time at an airport where he or she is to stay for a long time by checking the screens shown in FIGS. 4 to 6. Note that the display screens shown in FIGS. 4 to 6 are examples, and the displayed tour information may be displayed including content that informs the passenger 55 of detailed information of the tour, such as a meeting place and a meeting time for the tour. Also, the location for performing check-in, security inspection, gates, and the like may be displayed together with a map in the information regarding re-boarding. Also, when displaying the meeting place of the tour or the location of information regarding re-boarding (check-in, security, gate), the current location, the time required when walking at a general speed, and a route map may also be displayed.

Note that the display control unit 4 may display the information determined by the first information generation unit 5 and the information determined by the second information generation unit 7 on one display screen. Also, if the re-boarding time acquired by the time acquisition unit 6 is less than a predetermined time, for example, less than one hour, the display control unit 4 may display only the information regarding re-boarding.

Also, if the passenger 55 is not a transit passenger, the display control unit 4 may display information on a transportation system operating at the airport or the like to the passenger 55.

### [Apparatus operation]

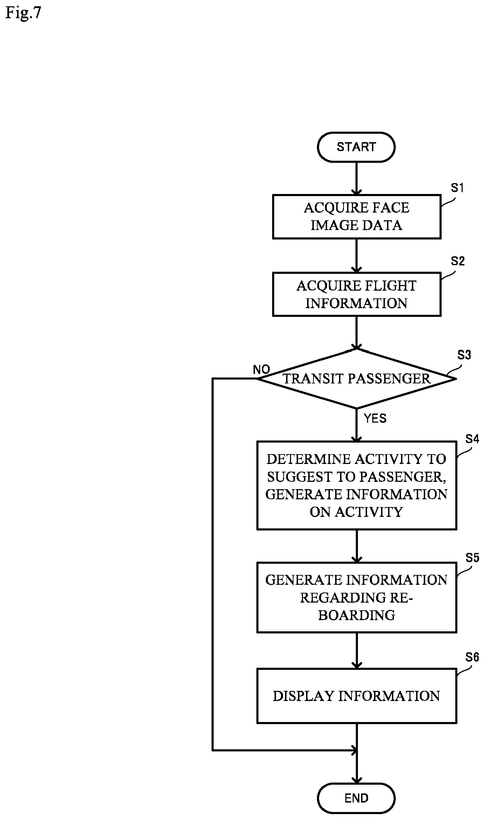

Next, the operation of the information processing apparatus 10 in the present example embodiment will be described with reference to FIG. 7. FIG. 7 is a flow chart showing the operation of the information processing apparatus 10. In the following description, FIGS. 1 to 4 will be referred to as appropriate. Also, in the present example embodiment, the status notification method is implemented by operating the information processing apparatus 10. Accordingly, the description of the information processing method in this example embodiment is replaced with the following description of the operation of the information processing apparatus 10. Also, in the description of FIG. 7, the biological information is face image data.

The biological information acquisition unit 1 acquires face image data captured by the image capture device 51 (S1). The flight information acquisition unit 2 acquires the flight information included in the identification information by acquiring the identification information corresponding to the face image data from the storage device 52 (S2). The passenger determination unit 3 determines, based on the flight information acquired in S2, whether the passenger 55 in the face image data is a transit passenger (S3).

If the passenger is a transit passenger (S3: YES), the first information generation unit 5 determines the activity to perform before re-boarding, which is to be suggested to the passenger 55, and generates the information (S4). Also, the second information generation unit 7 generates information regarding re-boarding (S5). Note that the processing order of S4 and S5 may be reversed, or only one of S4 and S5 may be executed.

The time acquisition unit 6 displays the information determined in S4 and S5 on the display devices 53 and 54 (S6). When performing display on the display device 54, the display control unit 4 transmits an e-mail including information on the activity to perform before re-boarding, which is to be suggested to the passenger 55, to the display device 54. At this time, the display control unit 4 acquires an e-mail address from the unique information included in the identification information acquired in S2, and transmits an e-mail based on the e-mail address. If the passenger 55 is not a transit passenger (S3: NO), this flow ends without being displayed information on the display devices 53 and 54 by the display control unit 4.

In this manner, when the passenger 55 who has disembarked from the aircraft is a transit passenger, the information processing apparatus 10 can display information according to which the passenger 55 can spend his or her time at the airport, to the passenger 55. As a result, the passenger 55 can effectively spend a layover at the airport where he or she is to stay for a long time.

### [Program]

The program in this example embodiment may be any program that causes a computer to execute steps S1 to S6 shown in FIG. 7. By installing and executing this program on a computer, the information processing apparatus 10 and the information processing method according to the example embodiment can be realized. In this case, the processor of the computer functions as the biological information acquisition unit 1, the flight information acquisition unit 2, the passenger determination unit 3, the display control unit 4, the first information generation unit 5, the time acquisition unit 6, and the second information generation unit 7, and performs processing.

Note that if the computer on which the program of the example embodiment is installed functions as the display control unit 4, the program of the present example embodiment need only be a program that causes the computer to execute steps S1 to S5 shown in FIG. 7. That is, if the computer on which the program is installed has a function of displaying the generated information, the program of the example embodiment generates information on an activity to perform before re-boarding, which is to be suggested to the passenger 55, and information regarding re-boarding, and the display screen on the display devices 53 and 54 need only use an existing display function.

Also, the program in the present example embodiment may be executed by a computer system constructed by a plurality of computers. In this case, for example, each computer may function as any one of the biological information acquisition unit 1, the flight information acquisition unit 2, the passenger determination unit 3, the display control unit 4, the first information generation unit 5, the time acquisition unit 6, and the second information generation unit 7.

In addition to general-purpose PCs, examples of computers include smartphones and tablet terminal devices.

### (Physical configuration of the device)

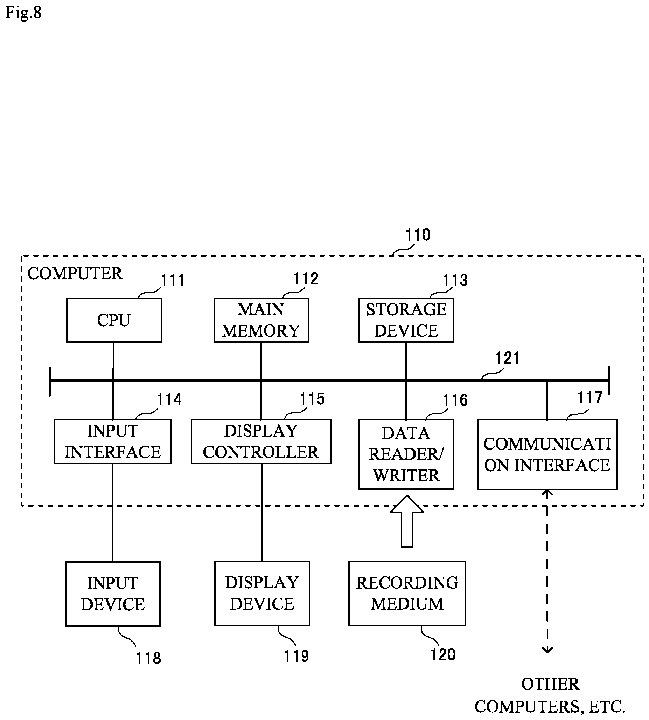

Here, a computer that realizes the information processing apparatus 10 by executing the program in the example embodiment will be described with reference to FIG. 8. FIG. 8 is a block diagram showing an example of a computer that realizes the information processing apparatus 10.

As shown in FIG. 8, the computer 110 includes a CPU (Central Processing Unit) 111, a main memory 112, a storage device 113, an input interface 114, a display controller 115, a data reader/writer 116, and a communication interface 117. These units are connected to each other via a bus 121 so as to be capable of data communication. Note that the computer 110 may include a GPU (Graphics Processing Unit) or an FPGA (Field-Programmable Gate Array) in addition to the CPU 111 or in place of the CPU 111.

The CPU 111 loads the program (codes) of the present example embodiment stored in the storage device 113 into the main memory 112, and executes the program in a predetermined order to perform various computations. The main memory 112 is typically a volatile storage device such as a DRAM (Dynamic Random Access Memory). Also, the program according to the present example embodiment is provided in a state of being stored in a computer readable recording medium 120. Note that the program according to the present example embodiment may also be distributed on the Internet, which is connected to via the communication interface 117.

Also, specific examples of the storage device 113 may include a semiconductor storage device such as a flash memory in addition to a hard disk. The input interface 114 mediates data transmission between the CPU 111 and input devices 118 such as a keyboard and mouse. The display controller 115 is connected to a display device 119 and controls the display on the display device 119. The data reader/writer 116 mediates data transmission between the CPU 111 and the recording medium 120, reads out the program from the recording medium 120, and writes the result of processing performed by the computer 110 in the recording medium 120. The communication interface 117 mediates data transmission between the CPU 111 and other computers.

Specific examples of the recording medium 120 include a general-purpose semiconductor storage device such as a CF (Compact Flash (registered trademark)) or an SD (Secure Digital), a magnetic storage medium such as a Flexible Disk, and an optical storage medium such as a CD-ROM (Compact Disk Read Only Memory).

A portion or all of the above-described example embodiment can be expressed by (Supplementary note 1) to (Supplementary note 15) described below, but is not limited thereto.

### (Supplementary note 1)

An information processing apparatus including:
a biological information acquisition unit configured to acquire biological information of a passenger who has disembarked from an aircraft;
a flight information acquisition unit configured to acquire flight information corresponding to the acquired biological information from a storage device in which the biological information of the passenger and the flight information of the passenger are stored in association with each other in advance;
a passenger determination unit configured to determine, based on the acquired flight information, whether the passenger is a passenger who is to re-board an aircraft after disembarking from the aircraft; and
a display control unit configured to display information corresponding to a determination result on a display device.

### (Supplementary note 2)

The information processing apparatus according to supplementary note 1, further including
a first information generation unit configured to determine an activity to perform before re-boarding, which is to be suggested to the passenger, and generate information on the activity, if the passenger is a re-boarding passenger,
in which the display control unit displays the generated information on the activity on the display device.

### (Supplementary note 3)

The information processing apparatus according to supplementary note 2, further including
a time acquisition unit configured to acquire a re-boarding time from disembarkation to re-boarding based on the flight information if the passenger is a re-boarding passenger,
in which the first information generation unit determines the activity based on the re-boarding time and generates information on the activity.

### (Supplementary note 4)

The information processing apparatus according to any one of supplementary notes 1 to 3, further including
a second information generation unit configured to generate information regarding re-boarding based on the flight information if the passenger is a re-boarding passenger,
in which the display control unit displays the determined information regarding re-boarding on the display device.

### (Supplementary note 5)

The information processing apparatus according to any one of supplementary notes 1 to 4,
in which the biological information is face image data.

### (Supplementary note 6)

An information processing method including:
a step of acquiring biological information of a passenger who has disembarked from an aircraft;
a step of acquiring flight information corresponding to the acquired biological information from a storage device in which the biological information of the passenger and the flight information of the passenger are stored in association with each other;
a step of determining, based on the acquired flight information, whether the passenger is a passenger who is to re-board an aircraft after disembarking from the aircraft; and
a step of displaying information corresponding to a determination result on a display device.

### (Supplementary note 7)

The information processing method according to supplementary note 6, further including
a step of determining an activity to perform before re-boarding, which is to be suggested to the passenger, and generating information on the activity, if the passenger is a re-boarding passenger,
in which, in the step of performing display on the display device, the generated information on the activity is displayed on the display device.

### (Supplementary note 8)

The information processing method according to supplementary note 7, further including
a step of acquiring a re-boarding time from disembarkation to re-boarding based on the flight information if the passenger is a re-boarding passenger,
in which, in the step of determining the activity, the activity is determined based on the re-boarding time and information on the activity is generated.

### (Supplementary note 9)

The information processing method according to any one of supplementary notes 6 to 8, further including
a step of generating information regarding re-boarding based on the flight information if the passenger is a re-boarding passenger,
in which, in the step of displaying on the display device, the determined information regarding re-boarding is displayed on the display device.

### (Supplementary note 10)

The information processing method according to any one of supplementary notes 6 to 9, in which the biological information is face image data.

### (Supplementary note 11)

A computer readable recording medium including a program recorded thereon, the program including instructions that cause a computer to carry out:
a step of acquiring biological information of a passenger who has disembarked from an aircraft;
a step of acquiring flight information corresponding to the acquired biological information from a storage device in which the biological information of the passenger and the flight information of the passenger are stored in association with each other; and
a step of determining, based on the acquired flight information, whether the passenger is a passenger who is to re-board an aircraft after disembarking from the aircraft.

### (Supplementary note 12)

The computer readable recording medium according to supplementary note 11,
wherein the program further includes instructions that cause the computer to carry out
a step of determining an activity to perform before re-boarding, which is to be suggested to the passenger, and generating information on the activity, if the passenger is a re-boarding passenger.

### (Supplementary note 13)

The computer readable recording medium according to supplementary note 12, wherein the program further includes instructions that cause the computer to carry out
a step of acquiring a re-boarding time from disembarkation to re-boarding based on the flight information if the passenger is a re-boarding passenger, and
in the step of determining the activity, the activity is determined based on the re-boarding time and information on the activity is generated.

### (Supplementary note 14)

The computer readable recording medium according to any one of supplementary notes 11 to 13,
wherein the program further includes instructions that cause the computer to carry out
a step of generating information regarding re-boarding based on the flight information if the passenger is a re-boarding passenger.

### (Supplementary note 15)

The computer readable recording medium according to any one of supplementary notes 11 to 14,
in which the biological information is face image data.

### LIST OF REFERENCE SIGNS

- 1: Biological information acquisition unit
- 2: Flight information acquisition unit
- 3: Passenger determination unit
- 4: Display control unit
- 5: First information generation unit
- 6: Time acquisition unit
- 7: Second information generation unit
- 10: Information processing apparatus
- 51: Image capture device
- 52: Storage device
- 53: Display device
- 54: Display device
- 55: Passenger
- 110: Computer
- 111: CPU
- 112: Main memory
- 113: Storage device
- 114: Input interface
- 115: Display controller
- 116: Data reader/writer
- 117: Communication interface
- 118: Input device
- 119: Display device
- 120: Recording medium
- 121: Bus

## Claims

1. An information processing apparatus comprising:
a biological information acquisition means for acquiring biological information of a passenger who has disembarked from an aircraft;
a flight information acquisition means for acquiring flight information corresponding to the acquired biological information from a storage device in which the biological information of the passenger and the flight information of the passenger are stored in association with each other in advance;
a passenger determination means for determining, based on the acquired flight information, whether the passenger is a passenger who is to re-board an aircraft after disembarking from the aircraft; and
a display control means for displaying information corresponding to a determination result on a display device.

2. The information processing apparatus according to claim 1, further comprising
a first information generation means for determining an activity to perform before re-boarding, which is to be suggested to the passenger, and generating information on the activity, if the passenger is a re-boarding passenger,
wherein the display control means displays the generated information on the activity on the display device.

3. The information processing apparatus according to claim 2, further comprising
a time acquisition means for acquiring a re-boarding time from disembarkation to re-boarding based on the flight information if the passenger is a re-boarding passenger,
wherein the first information generation means determines the activity based on the re-boarding time and generates information on the activity.

4. The information processing apparatus according to any one of claims 1 to 3, further comprising
a second information generation means for generating information regarding re-boarding based on the flight information if the passenger is a re-boarding passenger,
wherein the display control means displays the determined information regarding re-boarding on the display device.

5. The information processing apparatus according to any one of claims 1 to 4,
wherein the biological information is face image data.

6. An information processing method comprising:
acquiring biological information of a passenger who has disembarked from an aircraft;
acquiring flight information corresponding to the acquired biological information from a storage device in which the biological information of the passenger and the flight information of the passenger are stored in association with each other;
determining, based on the acquired flight information, whether the passenger is a passenger who is to re-board an aircraft after disembarking from the aircraft; and
displaying information corresponding to a determination result on a display device.

7. The information processing method according to claim 6, further comprising
determining an activity to perform before re-boarding, which is to be suggested to the passenger, and generating information on the activity, if the passenger is a re-boarding passenger,
wherein, when performing display on the display device, the generated information on the activity is displayed on the display device.

8. The information processing method according to claim 7, further comprising
acquiring a re-boarding time from disembarkation to re-boarding based on the flight information if the passenger is a re-boarding passenger,
wherein, when determining the activity, the activity is determined based on the re-boarding time and information on the activity is generated.

9. The information processing method according to any one of claims 6 to 8, further comprising
generating information regarding re-boarding based on the flight information if the passenger is a re-boarding passenger,
wherein, when performing display on the display device, the determined information regarding re-boarding is displayed on the display device.

10. The information processing method according to any one of claims 6 to 9, wherein the biological information is face image data.

11. A computer readable recording medium including a program recorded thereon, the program including instructions that cause a computer to carry out:
acquiring biological information of a passenger who has disembarked from an aircraft;
acquiring flight information corresponding to the acquired biological information from a storage device in which the biological information of the passenger and the flight information of the passenger are stored in association with each other; and
determining, based on the acquired flight information, whether the passenger is a passenger who is to re-board an aircraft after disembarking from the aircraft.

12. The computer readable recording medium according to claim 11,
wherein the program further includes instructions that cause the computer to carry out
determining an activity to perform before re-boarding, which is to be suggested to the passenger, and generate information on the activity, if the passenger is a re-boarding passenger.

13. The computer readable recording medium according to claim 12,
wherein the program further includes instructions that cause the computer to carry out acquiring a re-boarding time from disembarkation to re-boarding based on the flight information if the passenger is a re-boarding passenger, and
when determining the activity, the activity is determined based on the re-boarding time and information on the activity is generated.

14. The computer readable recording medium according to any one of claims 11 to 13,
wherein the program further includes instructions that cause the computer to carry out
generating information regarding re-boarding based on the flight information if the passenger is a re-boarding passenger.

15. The computer readable recording medium according to any one of claims 11 to 14,
wherein the biological information is face image data.
